# EUROPÄISCHE PATENTSCHRIFT

(11) **EP 4 559 618 B1**
(45) Veröffentlichungstag und Bekanntmachung des Hinweises auf die Patenterteilung: **31.12.2025**
(21) Anmeldenummer: 23212435.4
(22) Anmeldetag: 27.11.2023
(51) Int. Cl.: B23Q 1/54, B23Q 7/02, B23Q 39/02

(54) **WERKZEUGMASCHINE UND VERFAHREN ZUM BETREIBEN EINER DERARTIGEN WERKZEUGMASCHINE**
MACHINE TOOL AND METHOD OF OPERATING SUCH A MACHINE TOOL
MACHINE-OUTIL ET PROCÉDÉ D'UTILISATION D'UNE TELLE MACHINE-OUTIL

(43) Veröffentlichungstag der Anmeldung: 28.05.2025
(73) Patentinhaber: Schwäbische Werkzeugmaschinen GmbH, 78713 Schramberg-Waldmössingen (DE)
(72) Erfinder: Weber, Stefan, 78662 Bösingen (DE); Mixner, Marcus, 78739 Hardt (DE)
(74) Vertreter: Schorr, Peter Karl

(56) Entgegenhaltungen:
- EP-A2- 3 017 910
- EP-A2- 3 715 051
- US-A1- 2015 165 576

## Beschreibung

Die Erfindung betrifft eine Werkzeugmaschine mit einem Maschinengestell, mit mindestens einer ersten Arbeitsspindel, mit mindestens einer zweiten Arbeitsspindel, mit mindestens einem der ersten Arbeitsspindel zugeordneten ersten Schwenkträger, der im Maschinengestell um eine erste Schwenkträgerachse schwenkbar gelagert ist, und der mindestens einen ersten Werkstücktisch und mindestens einen zweiten Werkstücktisch umfasst, wobei erster Werkstücktisch und zweiter Werkstücktisch bezüglich der ersten Schwenkträgerachse auf einander gegenüberliegenden Seiten des ersten Schwenkträgers am ersten Schwenkträger angeordnet sind und jeweils einen Störbereich definieren, in welchem sie anordenbar oder angeordnet sind, und mit mindestens einem der zweiten Arbeitsspindel zugeordneten zweiten Schwenkträger, der im Maschinengestell um eine parallel zur ersten Schwenkträgerachse verlaufende und zur ersten Schwenkträgerachse beabstandete zweite Schwenkträgerachse schwenkbar gelagert ist, und der mindestens einen ersten Werkstücktisch und mindestens einen zweiten Werkstücktisch umfasst, die bezüglich der zweiten Schwenkträgerachse auf einander gegenüberliegenden Seiten des zweiten Schwenkträgers am zweiten Schwenkträger angeordnet sind und jeweils einen Störbereich definieren, in welchem sie anordenbar oder angeordnet sind, wobei der erste Schwenkträger und der zweite Schwenkträger jeweils von einer ersten Schwenkstellung, in der der jeweils erste Werkstücktisch in einem Arbeitsbereich angeordnet und der ersten bzw. der zweiten Arbeitsspindel zugänglich ist, jeweils in eine zweite Schwenkstellung überführbar ist/sind, in der der jeweils zweite Werkstücktisch im Arbeitsbereich angeordnet und der ersten bzw. der zweiten Arbeitsspindel zugänglich ist. Darüber hinaus betrifft die Erfindung ein Verfahren zum Betreiben einer derartigen Werkzeugmaschine.

Werkzeugmaschinen sind in unterschiedlichen Ausführungsformen und Ausgestaltungen aus dem Stand der Technik bekannt. Diese können beispielsweise Maschinengestelle umfassen, an denen ein Werkstücktisch angeordnet ist, an dem Werkstücke lösbar befestigt werden können. Die Werkstücke können durch eine Arbeitsspindel der Werkzeugmaschine bearbeitet werden.

Bei bekannten Werkzeugmaschinen wird der Werkstücktisch mit Werkstücken beladen, während die Arbeitsspindel außer Betrieb ist. Darüber hinaus ruht die Arbeitsspindel, wenn die Werkstücke nach der Bearbeitung vom Werkstücktisch entfernt werden. Hierdurch können hohe Stillstandzeiten der Werkzeugmaschine auftreten.

Darüber hinaus sind Werkzeugmaschinen bekannt, bei denen am Maschinengestell ein so genannter Schwenkträger schwenkbar angeordnet ist, an dem zwei Werkstücktische angeordnet sind, die bezüglich der Schwenkträgerachse des Schwenkträgers auf einander gegenüberliegenden Seiten am Schwenkträger angeordnet sind. Durch Drehen des Schwenkträgers um die Schwenkträgerachse wird hierbei jeweils ein Werkstücktisch von einem Arbeitsbereich in einen Beladebereich überführt und gleichzeitig der im Beladebereich befindliche Werkstücktisch in den Arbeitsbereich. Hierdurch können die Stillstandzeiten der Werkzeugmaschine reduziert werden. Eine derartige Werkzeugmaschine ist z.B. aus der EP 3 715 051 A2 bekannt.

Darüber hinaus sind Schwenkträger bekannt, an denen auf jeder Seite des Schwenkträgers zwei Werkstücktische angeordnet sind, wobei jedem Werkstücktisch eine eigene Arbeitsspindel zugeordnet ist. Hierdurch muss ein Abstand zu den Arbeitsspindeln gewährleistet werden, der es ermöglicht, dass der Schwenkträger kollisionsfrei schwenken kann. Hierdurch ist ein Abstand von Schwenkträgerachse zur Arbeitsspindel sehr groß und die Werkzeugmaschine besitzt einen hohen Platzbedarf.

Eine Aufgabe eines Ausführungsbeispiels der Erfindung ist, eine Werkzeugmaschine vorzuschlagen, bei der ein Abstand zwischen Schwenkträgerachse und Arbeitsspindel, insbesondere bei gleichbleibenden oder verbesserten Bearbeitungszeiten, reduziert ist.

Diese Aufgabe wird bei einer eingangs genannten Werkzeugmaschine dadurch gelöst, dass der Störbereich des ersten Werkstücktischs und/oder der Störbereich des zweiten Werkstücktisch des ersten Schwenkträgers den Schwenkbereich des ersten Schwenkträgers quer zur ersten Schwenkträgerachse nach außen überragt/überragen.

Dadurch, dass die Werkzeugmaschine einen ersten Schwenkträger und einen zweiten Schwenkträger umfasst, die jeweils einen ersten Werkstücktisch und einen zweiten Werkstücktisch umfassen, können die Abstände der Arbeitsspindeln zu den Schwenkachsen gering gehalten werden. Das Verschwenken zweier Schwenkträger, die auf jeder Seite einen Werkstücktisch aufweisen, benötigt jeweils einen kleineren Drehkreis, als ein großer Schwenkträger, der beidseitig zwei Werkstücktische aufweist.

Dadurch, dass der Störbereich des ersten Werkstücktischs und/oder der Störbereich des zweiten Werkstücktischs des ersten Schwenkträgers den Schwenkbereich des ersten Schwenkträgers quer zur ersten Schwenkträgerachse nach außen überragt, kann der erste Schwenkträger bei gleichbleibender oder verbesserter Zugänglichkeit durch die erste Arbeitsspindel mit geringerem Schwenkbereich, also mit verringerter Dimensionierung, ausgebildet werden. Darüber ist hierdurch ein Anordnen des ersten Werkstücktischs und/oder des zweiten Werkstücktischs mit reduziertem Abstand zur ersten Arbeitsspindel gewährleistbar.

Dadurch, dass durch die erste Arbeitsspindel und durch die zweite Arbeitsspindel in der ersten Schwenkstellung jeweils die ersten Werkstücktische und in der zweiten Schwenkstellung jeweils die zweiten Werkstücktische zugänglich und daran angeordnete Werkstücke bearbeitbar sind, ist eine bearbeitbare Anzahl von Werkstücken durch die Werkzeugmaschine hoch.

Grundsätzlich ist es denkbar, dass bei der Werkzeugmaschine an jedem der beiden Schwenkträger jeweils nur ein erster Werkstücktisch und nur ein zweiter Werkstücktisch angeordnet ist, die bezüglich der Schwenkträgerachse einander gegenüberliegen. Einander gegenüberliegen heißt, dass, wenn einer der Werkstücktische auf der der Arbeitsspindel zugewandten Seite des Schwenkträgers angeordnet ist, der jeweils andere Werkstücktisch solchenfalls auf der der Arbeitsspindel abgewandten Seite des Schwenkträgers angeordnet ist.

Darüber hinaus sind Ausführungsformen der Werkzeugmaschine denkbar, bei denen der erste Schwenkträger auf einer Seite zwei erste Werkstücktische sowie auf der anderen Seite zwei zweite Werkstücktische umfasst, die bezüglich der ersten Schwenkträgerachse aufeinander gegenüberliegenden Seiten angeordnet sind. Diese gilt in gleicher Weise auch für den zweiten Schwenkträger, der zwei erste Werkstücktische und zwei zweite Werkstücktische umfassen kann, die bezüglich der zweiten Schwenkträgerachse aufeinander gegenüberliegenden Seiten angeordnet sind.

Derartige Ausführungsformen lassen sich weiter hochskalieren, bei der jeder Schwenkträger mindestens drei erste Werkstücktische und drei zweite Werkstücktische oder vier erste Werkstücktische und vier zweite Werkstücktische, usw. umfasst.

Das Überführen von der ersten Schwenkstellung in die zweite Schwenkstellung kann eine Rotation um 180° um die erste Schwenkachse, bzw. zweite Schwenkachse umfassen.

Das Wort "bzw." ist im ursprünglichen Wortsinn "und im anderen Fall" zu verstehen und setzt die Beziehung des vorangegangenen Satzes oder Halbsatzes fort.

Es erweist sich als vorteilhaft, wenn der mindestens eine erste Werkstücktisch und/oder der mindestens eine zweite Werkstücktisch des ersten Schwenkträgers und/oder wenn der mindestens eine erste Werkstücktisch und/oder der mindestens eine zweite Werkstücktisch des zweiten Schwenkträgers jeweils zum Aufnehmen und Festlegen mindestens eines Werkstücks ausgebildet ist/sind. Insbesondere können die Werkstücktische derart ausgebildet sein, dass mehr als nur ein Werkstück an diesem angeordnet sein kann.

Die Werkzeugmaschine lässt sich bezüglich ihrer Erstreckung entlang der vertikalen Y-Achse kompakt ausbilden, wenn die Störbereiche des ersten Werkstücktischs und/oder des zweiten Werkstücktischs des ersten Schwenkträgers beim Überführen von der ersten Schwenkstellung in die zweite Schwenkstellung und zurück mit dem Schwenkbereich des zweiten Schwenkträgers überlappt/überlappen.

Dadurch, dass die Störbereiche des ersten Werkstücktischs und/oder des zweiten Werkstücktischs des ersten Schwenkträgers beim Überführen von der ersten Schwenkstellung in die zweite Schwenkstellung mit dem Schwenkbereich des zweiten Schwenkträgers überlappen, kann ein Abstand der ersten Schwenkträgerachse zur zweiten Schwenkträgerachse reduzierter ausgebildet sein, als bei einer Anordnung, bei der die Störbereiche nicht mit dem Schwenkbereich des zweiten Schwenkträgers überlappen.

Die Gesamterstreckung der Werkzeugmaschine parallel zu einer vertikalen Y-Achse lässt sich weiter reduzieren, wenn der erste Schwenkträger und der zweite Schwenkträger quer zur ersten Schwenkträgerachse betrachtet überlappungsfrei zueinander angeordnet sind oder wenn der erste Schwenkträger und der zweite Schwenkträger quer zur ersten Schwenkträgerachse betrachtet einander abschnittsweise überlappen.

Wenn der erste Schwenkträger und der zweite Schwenkträger einander abschnittsweise überlappen, kann der erste Schwenkträger bereichsweise im zweiten Schwenkträger angeordnet sein oder umgekehrt. Solchenfalls kann beispielsweise der zweite Schwenkträger bezüglich einer horizontal verlaufenden X-Achse länger ausgebildet sein als der erste Schwenkträger, wodurch dieser in einen zurückspringenden Bereich anordenbar ist. Erster Schwenkträger und zweiter Schwenkträger können beispielsweise trommelartig ausgebildet sein und an ihren beiden Enden, bezüglich der horizontal verlaufenden X-Achse, einen größeren Radius quer zur horizontalen X-Achse umfassen, als in ihren dazwischenliegenden, inneren Bereichen. Solchenfalls kann einer der Schwenkträger, der kürzer ausgebildet ist als der andere Schwenkträger, in diesen zurückspringenden Bereichen angeordnet sein.

Ein kompaktes Ausgestalten bezüglich der vertikal verlaufenden Y-Achse, lässt sich weiter verbessern, wenn der Störbereich des ersten Werkstücktischs und/oder der Störbereich des zweiten Werkstücktisch des zweiten Schwenkträgers den Schwenkbereich des zweiten Schwenkträgers quer zur zweiten Schwenkträgerachse nach außen überragt/überragen und beim Überführen von der ersten Schwenkstellung in die zweite Schwenkstellung und zurück mit dem Schwenkbereich des ersten Schwenkträgers überlappt/überlappen.

Insbesondere, wenn der erste Werkstücktisch und/oder der zweite Werkstücktisch mit seinen Störbereichen beim Überführen von der ersten Schwenkstellung in die zweite Schwenkstellung mit dem zweiten Schwenkträger überlappt und der erste Werkstücktisch und/oder der zweite Werkstücktisch des zweiten Schwenkträgers beim Überführen von der ersten Schwenkstellung in die zweite Schwenkstellung mit dem ersten Schwenkträger überlappt, lässt sich eine besonders kompakte Ausgestaltung der Werkzeugmaschine bezüglich der vertikal verlaufenden Y-Achse realisieren.

Grundsätzlich ist es denkbar, dass der erste Werkstücktisch des ersten Schwenkträgers, wenn er aus der ersten Schwenkstellung in die zweite Schwenkstellung überführt wird, in dieser an einer beliebigen Stelle der Werkzeugmaschine angeordnet ist. Gleiches gilt für den zweiten Werkstücktisch des ersten Werkstückträgers, wenn dieser von der zweiten Schwenkstellung in die erste Schwenkstellung und zurück, geführt wird.

Darüber hinaus sind auch Ausführungsformen der Werkzeugmaschine denkbar, bei denen zusätzlich noch ein dritter Werkstücktisch und/oder ein vierter Werkstücktisch vorgesehen sind, wobei erster Werkstücktisch, zweiter Werkstücktisch, dritter Werkstücktisch und vierter Werkstücktisch gleichmäßig bezüglich der ersten Schwenkträgerachse angeordnet sind und ein Überführen von der ersten Schwenkstellung in die zweite Schwenkstellung karusellartig erfolgt.

Allerdings erweist es sich als vorteilhaft, wenn die Werkzeugmaschine jeweils einen oder mehrere erste Werkstücktische und jeweils einen oder mehrere zweite Werkstücktische an jeweils einem Schwenkträger umfasst.

Um ein Be- und Entladen der Werkzeugmaschine zu gewährleisten, erweist es sich solchenfalls als vorteilhaft, wenn in der ersten Schwenkstellung des ersten Schwenkträgers und/oder in der ersten Schwenkstellung des zweiten Schwenkträgers der jeweils zweite Werkstücktisch in einem Beladebereich angeordnet ist, und/oder wenn in der zweiten Schwenkstellung des ersten Schwenkträgers und/oder in der zweiten Schwenkstellung des zweiten Schwenkträgers der jeweils erste Werkstücktisch im Beladebereich angeordnet ist.

Grundsätzlich ist es denkbar, dass der erste Werkstücktisch und/oder der zweite Werkstücktisch des ersten Schwenkträgers und/oder des zweiten Schwenkträgers jeweils drehfest an ihrem Schwenkträger festgelegt sind.

Ein Bearbeiten durch die erste Arbeitsspindel, bzw. die zweite Arbeitsspindel, lässt sich jedoch erleichtern, wenn der erste Werkstücktisch des ersten Schwenkträgers, um eine parallel zur ersten Schwenkträgerachse verlaufende erste Werkstücktischachse schwenkbar gelagert ist, und wenn der zweite Werkstücktisch des ersten Schwenkträgers, um eine parallel zur ersten Schwenkträgerachse verlaufende zweite Werkstücktischachse schwenkbar gelagert ist, wobei die Schwenkbereiche des ersten Werkstücktischs und des zweiten Werkstücktischs die jeweiligen Störbereiche des ersten Werkstücktischs bzw. des zweiten Werkstücktischs bilden und/oder dass der erste Werkstücktisch des zweiten Schwenkträgers, um eine parallel zur zweiten Schwenkträgerachse verlaufende erste Werkstücktischachse schwenkbar gelagert ist, und wenn der zweite Werkstücktisch des zweiten Schwenkträgers, um eine parallel zur zweiten Schwenkträgerachse verlaufende zweiten Werkstücktischachse schwenkbar gelagert ist, wobei die Schwenkbereiche des ersten Werkstücktischs und des zweiten Werkstücktischs die jeweiligen Störbereiche des ersten Werkstücktischs, bzw. des zweiten Werkstücktischs bilden.

Wenn die ersten Werkstücktische und/oder die zweiten Werkstücktische des ersten Schwenkträgers, bzw. des zweiten Schwenkträgers in den Schwenkbereich des zweiten Schwenkträgers, bzw. des ersten Schwenkträgers beim Überführen von der ersten Schwenkstellung in die zweite Schwenkstellung oder zurück eingreifen, erweist es sich für einen kollisionsfreien Betrieb der Werkstückmaschine als vorteilhaft, wenn der erste Schwenkträger in einer ersten Freigabestellung anordenbar ist, in der der erste Werkstücktisch und der zweite Werkstücktisch in einer Position und/oder Ausrichtung anordenbar sind, in der der zweite Schwenkträger mit seinem ersten Werkstücktisch und seinem zweiten Werkstücktisch kollisionsfrei von der ersten Schwenkstellung in die zweite Schwenkstellung und umgekehrt überführbar ist und/oder wenn der zweite Schwenkträger in einer zweiten Freigabestellung anordenbar ist, in der der erste Werkstücktisch und der zweiten Werkstücktisch in einer Position und/oder Ausrichtung anordenbar sind, in der der erste Schwenkträger mit seinem ersten Werkstücktisch und seinem zweiten Werkstücktisch kollisionsfrei von der ersten Schwenkstellung in die zweite Schwenkstellung und umgekehrt überführbar ist.

Hierdurch kann gewährleistet werden, dass beim Überführen von der ersten Schwenkstellung in die zweite Schwenkstellung und umgekehrt, die ersten Werkstücktische und die zweiten Werkstücktische mit ihren Störbereichen nicht überlappen, wodurch eine Kollision vermeidbar ist.

Das Überführen des ersten Schwenkträgers in die erste Freigabestellung, bzw. des zweiten Schwenkträgers in die zweite Freigabestellung, kann grundsätzlich beliebig erfolgen. Es erweist sich als vorteilhaft, wenn das Überführen des ersten Schwenkträgers in die erste Freigabestellung ein Drehen oder Schwenken des ersten Schwenkträgers um die erste Schwenkträgerachse und/oder ein Drehen oder Schwenken des ersten Werkstücktischs um die erste Werkstücktischachse und/oder des zweiten Werkstücktischs um die zweite Werkstücktischachse umfasst und/oder wenn das Überführen des zweiten Schwenkträgers in die zweite Freigabestellung ein Drehen oder Schwenken des zweiten Schwenkträgers um die zweite Schwenkträgerachse und/oder ein Drehen oder Schwenken des ersten Werkstücktischs um die erste Werkstücktischachse und/oder des zweiten Werkstücktischs um die zweite Werkstücktischachse umfasst.

Insbesondere, wenn die ersten Werkstücktische und die zweiten Werkstücktische drehfest und starr an den Schwenkträgern angeordnet sind, erweist es sich als vorteilhaft, wenn das Überführen in die erste Freigabestellung, bzw. in die zweite Freigabestellung ausschließlich ein Überführen des ersten Schwenkträgers durch Drehen oder Schwenken um die erste Schwenkträgerachse, bzw. des zweiten Schwenkträgers mit einem Drehen oder Schwenken um die zweite Schwenkträgerachse umfasst.

Wenn die ersten Werkstücktische und/oder die zweiten Werkstücktische jeweils um die erste Werkstücktischachse, bzw. zweite Werkstücktischachse drehbar sind, können diese ausschließlich oder ergänzend zur Rotation um die erste Schwenkträgerachse, bzw. zweite Schwenkträgerachse zusätzlich um ihre eigene Werkstücktischachse gedreht werden.

Es sind Ausführungsformen der Werkstückmaschine denkbar, bei denen der erste Schwenkträger und der zweite Schwenkträger in einem unabhängigen Betriebsmodus bezüglich ihrer Kinematik entkoppelt, separat und unabhängig voneinander in die erste Schwenkstellung, in die zweite Schwenkstellung, in die erste Freigabestellung und/oder die zweite Freigabestellung überführbar sind und/oder bei denen der erste Schwenkträger und der zweite Schwenkträger in einem abhängigen Betriebsmodus bezüglich ihrer Kinematik gekoppelt, gemeinsam und gleichzeitig in die erste Schwenkstellung, in die zweite Schwenkstellung, in die erste Freigabestellung und/oder die zweite Freigabestellung überführbar sind.

Wenn der erste Schwenkträger und der zweite Schwenkträger in einem unabhängigen Betriebsmodus bezüglich ihrer Kinematik entkoppelt, separat und unabhängig voneinander in die erste Schwenkstellung, in die zweite Schwenkstellung, in die erste Freigabestellung und/oder die zweite Freigabestellung überführbar sind, kann jedem Schwenkträger eine eigene Antriebseinheit zugeordnet sein.

Wenn erster Schwenkträger und zweiter Schwenkträger in einem abhängigen Betriebsmodus in die einzelnen Stellungen überführbar sind, können dem ersten Schwenkträger und dem zweiten Schwenkträger ein gemeinsamer Antrieb zugeordnet sein, durch den beide Schwenkträger miteinander gekoppelt bewegbar sind.

Darüber hinaus sind Ausführungsformen der Werkzeugmaschine denkbar, bei denen die erste Schwenkträgerachse und die parallel zur ersten Schwenkträgerachse verlaufende zweite Schwenkträgerachse parallel zu einer horizontal verlaufenden X-Achse verlaufen, wobei die erste Schwenkträgerachse und die zweite Schwenkträgerachse bezüglich einer vertikal verlaufenden Y-Achse zueinander beabstandet sind, insbesondere bezüglich der vertikal verlaufenden Y-Achse übereinander angeordnet sind und insbesondere bezüglich der quer dazu verlaufenden vertikalen Y-Achse miteinander fluchten, oder bei denen die erste Schwenkträgerachse und die parallel zur ersten Schwenkträgerachse verlaufende zweite Schwenkträgerachse parallel zu einer vertikal verlaufenden Y-Achse verlaufen, wobei die erste Schwenkträgerachse und die zweite Schwenkträgerachse bezüglich einer horizontal verlaufenden X-Achse zueinander beabstandet sind, insbesondere bezüglich der horizontal verlaufenden X-Achse nebeneinander angeordnet sind und insbesondere bezüglich der quer dazu verlaufenden horizontalen X-Achse miteinander fluchten.

Bei einer Ausführungsform der Werkzeugmaschine ist vorgesehen, dass die erste Schwenkträgerachse und die zweite Schwenkträgerachse sowie die ersten Werkstücktischachsen und die zweiten Werkstücktischachsen parallel zueinander und parallel zur horizontal verlaufenden X-Achse verlaufen oder dass die erste Schwenkträgerachse, die zweite Schwenkträgerachse sowie die ersten Werkstücktischachsen und die zweiten Werkstücktischachsen parallel zueinander und parallel zur vertikal verlaufenden Y-Achse verlaufen.

Bei den zuvor beschriebenen Ausführungsformen der Werkzeugmaschine verlaufen alle Achsen der Werkstücktische und der Schwenkträger parallel zueinander.

Die erste Spindelachse der ersten Arbeitsspindel und/oder die zweite Spindelachse der zweiten Arbeitsspindel, kann/können in beiden räumlichen Ausrichtungen der Schwenkträgerachsen und der dazugehörigen Werkstücktischachsen quer dazu verlaufen.

Die Werkzeugmaschine lässt sich bezüglich ihrer räumlichen Abmaße kompakt ausgestalten, wenn in der ersten Schwenkstellung und in der zweiten Schwenkstellung der erste Werkstücktisch und der zweite Werkstücktisch eines Schwenkträgers jeweils bezüglich der zugehörigen Schwenkträgerachse des jeweiligen Schwenkträgers, an dem sie angeordnet sind, punktsymmetrisch zueinander angeordnet sind und bei einem horizontalen Verlauf der jeweiligen Schwenkträgerachse, der erste Werkstücktisch und der zweite Werkstücktisch bezüglich einer vertikalen Achse versetzt zueinander angeordnet sind und insbesondere die Schwenkbereiche des ersten Werkstücktischs und des zweiten Werkstücktischs des dazugehören Schwenkträgers mit einer durch die Schwenkträgerachse verlaufenden vertikalen Ebene überlappen, und bei einem vertikalen Verlauf der jeweiligen Schwenkträgerachse, der erste Werkstücktisch und der zweite Werkstücktisch bezüglich einer horizontalen Achse versetzt zueinander angeordnet sind und insbesondere die Schwenkbereiche des ersten Werkstücktischs und des zweiten Werkstücktischs des dazugehören Schwenkträgers mit einer durch die Schwenkträgerachse verlaufenden horizontalen Ebene überlappen.

Hierdurch ist eine so genannte verschränkte Anordnung der Werkstücktische am Schwenkträger realisiert, wodurch die Werkzeugmaschine raumsparender ausbildbar ist. Ferner kann hierdurch ein Abstand zwischen erster Arbeitsspindel und/oder zweiter Arbeitsspindel zur ersten Schwenkträgerachse, bzw. zweiten Schwenkträgerachse reduziert werden.

Diese verschränkte Anordnung lässt sich beispielsweise erreichen, wenn in der ersten Schwenkstellung der Abstand der ersten Werkstücktische zur Schwenkachse geringer ist als maximal möglich.

Die Schwenkbereiche der ersten Werkstücktische und die Schwenkbereiche der den ersten Werkstücktischen jeweils zugeordneten zweiten Werkstücktischen können einander überlappen.

Bei einer derartigen Ausführungsform können die jeweiligen Werkstücktischachsen bezüglich einer quer verlaufenden Achse versetzt zueinander angeordnet sein. Wenn die jeweiligen Werkstücktischachsen beispielsweise parallel zu einer horizontal verlaufenden X-Achse verlaufen, ist die erste Werkstücktischachse zur zweiten Werkstücktischachse bezüglich einer vertikal verlaufenden Y-Achse versetzt angeordnet.

Bei Ausführungsformen, bei denen die erste Werkstücktischachse und die zweite Werkstücktischachse parallel zu einer vertikal verlaufenden Y-Achse verlaufend angeordnet ist, können diese bei der einander überlappenden Festlegung am Schwenkträger bezüglich der quer dazu verlaufenden horizontalen X-Achse versetzt zueinander angeordnet sein.

Darüber hinaus erweist es sich als vorteilhaft, wenn beim ersten Schwenkträger der Abstand zwischen erster Schwenkträgerachse und erster Werkstücktischachse kleiner ist als der Störbereich des ersten Werkstücktisches und/oder der Abstand zwischen erster Schwenkträgerachse und zweiter Werkstücktischachse kleiner ist als der Störbereich des zweiten Werkstücktisches.

Ferner kann beim zweiten Schwenkträger der Abstand zwischen zweiter Schwenkträgerachse und erster Werkstücktischachse kleiner sein als der Störkreis des ersten Werkstücktisches und/oder der Abstand zwischen zweiter Schwenkträgerachse und zweiter Werkstücktischachse kleiner sein als der Störbereich des zweiten Werkstücktisches.

Auch hierdurch ist ein bauraumreduziertes Ausgestalten der Werkzeugmaschine ermöglicht oder weiter verbessert.

Die mindestens eine erste Arbeitsspindel kann um eine erste Spindelachse drehbar gelagert sein und/oder die mindestens eine zweite Arbeitsspindel um eine zweite Spindelachse drehbar gelagert sein. Erste Spindelachse und/oder zweite Spindelachse können parallel zu einer horizontal verlaufenden Z-Achse verlaufen, die quer zur vertikal verlaufenden Y-Achse und quer zur horizontal verlaufenden X-Achse verläuft.

Bei einer Ausführungsform der Werkzeugmaschine ist vorgesehen, dass die erste Arbeitsspindel und die zweite Arbeitsspindel vertikal übereinander angeordnet sind, wenn die die erste Schwenkträgerachse und die parallel zur ersten Schwenkträgerachse verlaufende zweite Schwenkträgerachse parallel zur horizontal verlaufenden X-Achse verlaufen, und dass die erste Arbeitsspindel und die zweite Arbeitsspindel horizontal nebeneinander angeordnet sind, wenn die die erste Schwenkträgerachse und die parallel zur ersten Schwenkträgerachse verlaufende zweite Schwenkträgerachse parallel zur vertikal verlaufenden Y-Achse verlaufen.

Um ein Beladen und/oder Entladen eines Werkstücktisches bei gleichzeitigem Bearbeiten des gegenüberliegenden Werkstücktisches zu ermöglichen, erweist es sich als vorteilhaft, wenn der erste Schwenkträger eine erste Trennwand umfasst, durch die der erste Werkstücktisch und der zweite Werkstücktisch in der ersten Schwenkstellung und in der zweiten Schwenkstellung räumlich voneinander abgetrennt sind und der Beladebereich zum Arbeitsbereich in Gänze oder zumindest abschnittweise abgeschirmt ist und/oder wenn der zweite Schwenkträger eine zweite Trennwand umfasst, durch die der erste Werkstücktisch und der zweite Werkstücktisch in der ersten Schwenkstellung und in der zweiten Schwenkstellung räumlich voneinander abgetrennt sind und der Beladebereich zum Arbeitsbereich in Gänze oder zumindest abschnittsweise abgeschirmt ist.

Solchenfalls ist ein Bediener der Werkzeugmaschine durch die erste Trennwand und/oder durch die zweite Trennwand beim Zugriff auf den Beladebereich vom Arbeitsbereich abgeschirmt.

Der Arbeitsbereich kann sich sowohl über den ersten Schwenkträger als auch den zweiten Schwenkträger erstrecken. Darüber hinaus sind Ausführungsformen der Werkzeugmaschine denkbar, bei denen der erste Schwenkträger einen ersten Arbeitsbereich und der zweite Schwenkträger einen zweiten Arbeitsbereich umfasst, die räumlich voneinander getrennt sind.

Ferner kann solchenfalls der erste Schwenkträger einen ersten Beladebereich und der zweite Schwenkträger einen zweiten Beladebereich umfassen, die räumlich voneinander getrennt sind.

Die Werkzeugmaschine lässt sich vereinfacht realisieren, wenn dem ersten Schwenkträger und dem zweiten Schwenkträger ein gemeinsamer Arbeitsbereich und ein gemeinsamer Beladebereich zugeordnet sind.

Insbesondere, wenn der erste Werkstücktisch und der zweite Werkstücktisch einander zumindest abschnittsweise überlappen, kann bei einer Ausführungsform der Werkzeugmaschine vorgesehen sein, dass die erste Trennwand des ersten Schwenkträgers um eine parallel zur ersten Schwenkträgerachse verlaufende Achse flexibel und/oder elastisch biegbar ist und/oder dass die zweite Trennwand des zweiten Schwenkträgers um eine parallel zur zweiten Schwenkträgerachse verlaufende Achse flexibel und/oder elastisch biegbar ist.

Hierdurch ist das Abtrennen des Arbeitsbereichs vom Beladebereich vereinfacht anpassbar.

Grundsätzlich ist es denkbar, dass der erste Schwenkträger unmittelbar, spalt- und/oder fugenlos zum zweiten Schwenkträger benachbart angeordnet ist. Hierdurch lässt sich die Werkzeugmaschine bezüglich ihrer Dimensionierung bauraumreduziert ausgestalten.

Bei einer Ausführungsform der Werkzeugmaschine ist vorgesehen, dass das Maschinengestell mindestens einen Trennabschnitt umfasst, der zwischen dem ersten Schwenkträger und dem zweiten Schwenkträger angeordnet ist, wobei die erste Trennwand des ersten Schwenkträgers, der Trennabschnitt des Maschinengestells und die zweite Trennwand des zweiten Schwenkträgers in der ersten Schwenkstellung und in der zweiten Schwenkstellung den Arbeitsbereich vom Beladebereich räumlich zueinander in Gänze oder zumindest abschnittsweise, spalt- und/oder fugenlos voneinander trennen.

Darüber hinaus wird die Aufgabe gelöst durch ein Verfahren zum Betreiben einer derartigen Werkzeugmaschine, mit mindestens einen der zuvor genannten Merkmale, mit den Schritten:
a. Überführen des ersten Schwenkträgers von der ersten Schwenkstellung oder von der zweiten Schwenkstellung in eine erste Freigabestellung, in der der erste Werkstücktisch und der zweite Werkstücktisch in einer Position und/oder Ausrichtung angeordnet sind, in der der zweite Schwenkträger mit seinem ersten Werkstücktisch und seinem zweiten Werkstücktisch kollisionsfrei bezüglich des ersten Schwenkträgers von der ersten Schwenkstellung in die zweite Schwenkstellung und umgekehrt überführbar ist;
b. Überführen des zweiten Schwenkträgers von der ersten Schwenkstellung in die zweite Schwenkstellung oder von der zweiten Schwenkstellung in die erste Schwenkstellung; und
c. Überführen des ersten Schwenkträgers von der ersten Freigabestellung in die erste Schwenkstellung bzw. in die zweite Schwenkstellung;
   und/oder
d. Überführen des zweiten Schwenkträgers von der ersten Schwenkstellung oder von der zweiten Schwenkstellung in eine zweite Freigabestellung, in der der erste Werkstücktisch und der zweite Werkstücktisch in einer Position und/oder Ausrichtung angeordnet sind, in der der erste Schwenkträger mit seinem ersten Werkstücktisch und seinem zweiten Werkstücktisch kollisionsfrei bezüglich des zweiten Schwenkträgers von der ersten Schwenkstellung in die zweite Schwenkstellung und umgekehrt überführbar ist;
e. Überführen des ersten Schwenkträgers von der ersten Schwenkstellung in die zweite Schwenkstellung oder von der zweiten Schwenkstellung in die erste Schwenkstellung; und
f. Überführen des zweiten Schwenkträgers von der zweiten Freigabestellung in die erste Schwenkstellung bzw. in die zweite Schwenkstellung.

Bei einer Weiterbildung des Verfahrens erweist es sich als vorteilhaft, wenn das Überführen des ersten Schwenkträgers in die erste Freigabestellung ein Drehen des ersten Schwenkträgers um die erste Schwenkträgerachse und/oder ein Drehen oder Schwenken des ersten Werkstücktischs um die erste Werkstücktischachse und/oder des zweiten Werkstücktischs um die zweite Werkstücktischachse umfasst und/oder wenn das Überführen des zweiten Schwenkträgers in die zweite Freigabestellung ein Drehen des zweiten Schwenkträgers um die zweite Schwenkträgerachse und/oder ein Drehen oder Schwenken des ersten Werkstücktischs um die erste Werkstücktischachse und/oder des zweiten Werkstücktischs um die zweite Werkstücktischachse umfasst.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkzeugmaschine und des Verfahrens.

In der Zeichnung zeigt:
- Figur 1: Eine perspektivische Vorderansicht mit teiltransparenter Darstellung des ersten Schwenkträgers und des zweiten Schwenkträgers einer erfindungsgemäßen Werkzeugmaschine;
- Figur 2: Ein schematisches Ablaufdiagramm eines Ausführungsbeispiels des erfindungsgemäßen Verfahrens.

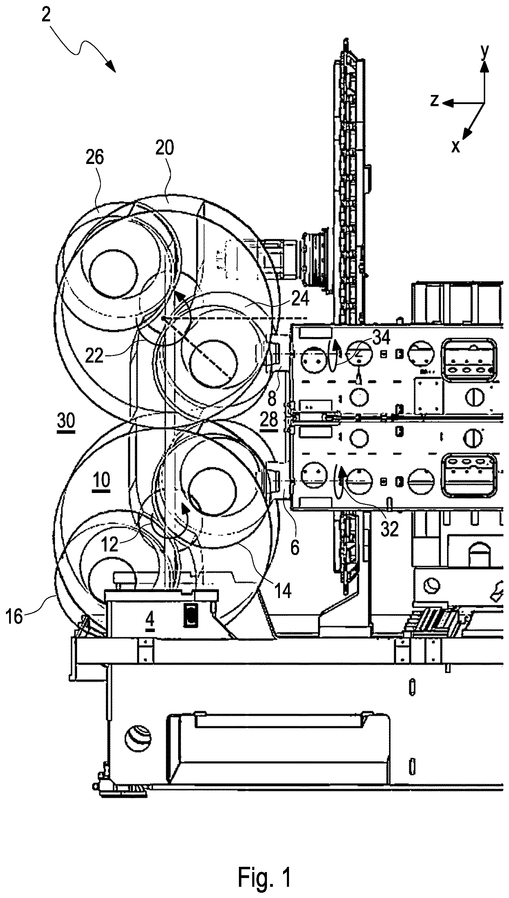

Figur 1 zeigt ein Ausführungsbeispiel einer insgesamt mit dem Bezugszeichen 2 versehenen Werkzeugmaschine. Die Werkzeugmaschine 2 umfasst ein Maschinengestell 4, eine erste Arbeitsspindel 6 und eine zweite Arbeitsspindel 8.

Die Werkzeugmaschine 2 umfasst einen der ersten Arbeitsspindel 6 zugeordneten ersten Schwenkträger 10, der im Maschinengestell 4 um eine erste Schwenkträgerachse 12 schwenkbar gelagert ist und der einen ersten Werkstücktisch 14 und einen zweiten Werkstücktisch 16 umfasst. Der erste Werkstücktisch 14 und der zweite Werkstücktisch 16 sind bezüglich der ersten Schwenkträgerachse 12 auf einander gegenüberliegenden Seiten am ersten Schwenkträger 10 angeordnet. Sie definieren jeweils einen Störbereich, in welchen sie anordenbar oder angeordnet sind. Der erste Werkstücktisch 14 des ersten Schwenkträgers 10 ist um eine erste Werkstücktischachse 15 und der zweite Werkstücktisch 16 um eine zweite Werkstücktischachse 17 am ersten Schwenkträger 10 drehbar gelagert.

Darüber hinaus umfasst die Werkzeugmaschine 2 einen der zweiten Arbeitsspindel 8 zugeordneten zweiten Schwenkträger 20, der im Maschinengestell 4 um eine parallel zur ersten Schwenkträgerachse 12 verlaufenden und zur ersten Schwenkträgerachse 12 beabstandeten zweiten Schwenkträgerachse 22 schwenkbar gelagert ist. Der zweite Schwenkträger 20 umfasst ebenfalls einen ersten Werkstücktisch 24 und einen zweiten Werkstücktisch 26. Der erste Werkstücktisch 24 und der zweite Werkstücktisch 26 sind bezüglich der zweiten Schwenkträgerachse 22 aufeinander gegenüberliegenden Seiten am zweiten Schwenkträger 20 angeordnet. Der erste Werkstücktisch 24 ist um eine erste Werkstücktischachse 25 und der zweite Werkstücktisch 26 um eine zweite Werkstücktischachse 27 drehbar am zweiten Schwenkträger 20 drehbar angeordnet.

Auch der erste Werkstücktisch 24 und der zweite Werkstücktisch 26 des zweiten Schwenkträgers 20, definieren jeweils Störbereiche, in welchen sie anordenbar oder angeordnet sind.

Der erste Schwenkträger 10 und der zweite Schwenkträger 20 sind jeweils von einer ersten Schwenkstellung (Figur 1), in der der jeweils erste Werkstücktisch 14, 24 in einem Arbeitsbereich angeordnet und der ersten Arbeitsspindel 6, bzw. der zweiten Arbeitsspindel 8 zugänglich sind, in jeweils eine zweite Schwenkstellung überführbar, in der der jeweils zweite Werkstücktisch 16, 26 am Arbeitsbereich 28 angeordnet und der ersten Arbeitsspindel 6, bzw. der zweiten Arbeitsspindel 8, zugänglich sind.

Bei dem in Figur 1 dargestellten Ausführungsbeispiel sind beim Überführen von der ersten Schwenkstellung in die zweite Schwenkstellung die jeweils ersten Werkstücktische 14, 24 von dem Arbeitsbereich 28 in einen Beladebereich 30 überführbar, in der die Werkstücktische 14, 16, 24, 26 mit Werkstücken beladen werden können.

Bei dem in Figur 1 ersichtlichen Ausführungsbeispiel sind die ersten Werkstücktische 14, 24 und die zweiten Werkstücktische 16, 26 derart ausgebildet, dass deren Störbereiche jeweils ihren Schwenkträger 10, 20 quer zur Schwenkträgerachse 12, 22 des jeweiligen Schwenkträgers 10, 20 nach außen überragen.

Darüber hinaus sind der erste Schwenkträger 10 und der zweite Schwenkträger 20 derart zueinander angeordnet, dass diese bezüglich einer vertikal verlaufenden Y-Achse übereinander und miteinander fluchtend angeordnet sind und mit ihren jeweiligen Schwenkbereichen unmittelbar aneinander angrenzend angeordnet sind. Hierdurch tauchen die Störbereiche des ersten Werkstücktischs 14 und des zweiten Werkstücktischs 16 des ersten Schwenkträgers 10 beim Überführen von der ersten Schwenkstellung in die zweite Schwenkstellung und umgekehrt, zumindest abschnittsweise in den Schwenkbereich des zweiten Schwenkträgers 20 ein. Umgekehrt greifen die Störbereiche des ersten Werkstücktischs 24 und des zweiten Werkstücktischs 26 des zweiten Schwenkträgers 20 in den Schwenkbereich des ersten Schwenkträgers 10 ein, wenn der zweite Schwenkträger von der ersten Schwenkstellung in die zweite Schwenkstellung oder umgekehrt, überführt wird.

Um eine Kollision beim Überführen von der ersten Schwenkstellung in die zweite Schwenkstellung zu vermeiden, ist der erste Schwenkträger 10 in eine erste Freigabestellung anordenbar, in der der erste Werkstücktisch 14 und der zweite Werkstücktisch 16 in einer Position und/oder Ausrichtung anordenbar ist, in der der zweite Schwenkträger 20 mit seinem ersten Werkstücktisch 24 und seinem zweiten Werkstücktisch 26 kollisionsfrei von der ersten Schwenkstellung in die zweite Schwenkstellung und umgekehrt, überführbar ist. Der zweite Schwenkträger 20 ist in einer zweiten Freigabestellung anordenbar, in der der ersten Werkstücktisch 24 und der zweite Werkstücktisch 26 in einer Position und/oder Ausrichtung anordenbar sind, in der der erste Schwenkträger 10 mit seinem ersten Werkstücktisch 14 und seinem zweiten Werkstücktisch 16 kollisionsfrei von der ersten Schwenkstellung in die zweite Schwenkstellung und zurück, überführbar sind.

Zum Überführen des ersten Schwenkträgers 10 in die erste Freigabestellung, kann der Schwenkträger 10 um die erste Schwenkträgerachse 12 gedreht werden. Zusätzlich können der erste Werkstücktisch 14 um die erste Werkstücktischachse 15 und/oder der zweite Werkstücktisch 16 um die zweite Werkstücktischachse 17 gedreht werden. Gleiches gilt für den zweiten Schwenkträger 20, der zum Überführen in die zweite Freigabestellung um die zweite Schwenkträgerachse 22 verdrehbar ist und/oder der erste Werkstücktisch 24 um die erste Werkstücktischachse 25 und der zweite Werkstücktisch 26 um die zweite Werkstücktischachse 27 verdreht wird.

Bei dem in Figur 1 ersichtlichen Ausführungsbeispiel verlaufen die erste Schwenkträgerachse 12, die zweite Schwenkträgerachse 22, die ersten Werkstücktischachsen 15, 25 und die zweiten Werkstücktischachsen 17, 27 parallel zueinander und parallel zu einer horizontal verlaufenden X-Achse. Die erste Arbeitsspindel 6 und die zweite Arbeitsspindel 8 sind bezüglich einer vertikal verlaufenden Y-Achse in der Vertikalen versetzt zueinander und übereinander, insbesondere miteinander fluchtend, angeordnet. Die erste Arbeitsspindel 6 ist um eine erste Spindelachse 32 drehbar gelagert und die zweite Arbeitsspindel 8 um eine zweite Spindelachse 34 drehbar gelagert. Die erste Spindelachse 32 und die zweite Spindelachse 34 verlaufen parallel zu einer horizontal verlaufenden Z-Achse. Diese verläuft quer zur horizontal verlaufenden X-Achse mit der vertikal verlaufenden Y-Achse.

Figur 1 zeigt ein Ausführungsbeispiel der Werkzeugmaschine 2, bei der der erste Schwenkträger 10 und der zweite Schwenkträger 20 in einer verschränkten Anordnung überführt sind, die die erste Schwenkstellung, bzw. die zweite Schwenkstellung bildet. Hierbei sind jeweils der erste Werkstücktisch 14, 24 und der zweite Werkstücktisch 16, 26 eines Schwenkträgers 10, 20 jeweils bezüglich der dazugehörigen Schwenkträgerachse 12, 22 des jeweiligen Schwenkträgers 10, 20, an dem sie angeordnet sind, punktsymmetrisch zueinander angeordnet. Bei dem horizontalen Verlauf der jeweiligen Schwenkträgerachse 10, 20, sind der jeweils erste Werkstücktisch 14, 24 und der zweite Werkstücktisch 16, 26 bezüglich einer vertikal verlaufenden Y-Achse versetzt zueinander angeordnet. Hierdurch ist ein Abstand der ersten Werkstücktischachse 15 und der zweiten Werkstücktischachse 17 zur ersten Schwenkträgerachse 12 reduziert sowie ein Abstand der ersten Werkstücktischachse 25 und der zweiten Werkstücktischachse 27 zur zweiten Schwenkträgerachse 22 reduziert. Hierdurch bedingt ist auch ein Abstand der ersten Arbeitsspindel 6 zur ersten Schwenkträgerachse 12 und ein Abstand der zweiten Arbeitsspindel 8 zur zweiten Schwenkträgerachse 22 reduziert.

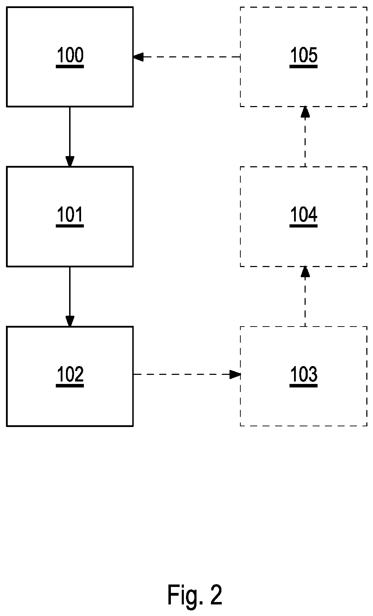

Figur 2 zeigt ein schematisches Ablaufdiagramm eines Ausführungsbeispiels eines erfindungsgemäßen Verfahrens zum Betreiben einer Werkzeugmaschine 2. Unter Verweis auf die Darstellung gemäß Figur 1 wird nachfolgend das Verfahren beschrieben:
In einem ersten Schritt 100 wird der erste Schwenkträger 10 von der ersten Schwenkstellung oder von der zweiten Schwenkstellung in eine erste Freigabestellung überführt, in der der erste Werkstücktisch 14 und der zweite Werkstücktisch 16 in einer Position und/oder Ausrichtung angeordnet sind, in der der zweite Schwenkträger 20 mit seinem ersten Werkstücktisch 24 und seinem zweiten Werkstücktisch 26 kollisionsfrei bezüglich des ersten Schwenkträgers 10 von der ersten Schwenkstellung in die zweite Schwenkstellung und umgekehrt, überführbar ist.

In einem hieran folgenden Schritt 101 wird der zweite Schwenkträger 20 von der ersten Schwenkstellung in die zweite Schwenkstellung oder von der zweiten Schwenkstellung in die erste Schwenkstellung überführt.

In einem hieran anschließenden Schritt 102 wird der erste Schwenkträger 10 von der ersten Freigabestellung zurück in die erste Schwenkstellung, bzw. in die zweite Schwenkstellung, überführt.

Alternativ oder ergänzend hierzu kann in einem Schritt 103 der zweite Schwenkträger 20 von der ersten Schwenkstellung oder von der zweiten Schwenkstellung in eine zweite Freigabestellung überführt werden, in der der ersten Werkstücktisch 24 und der zweite Werkstücktisch 26 in einer Position und/oder Ausrichtung angeordnet sind, in der der erste Schwenkträger 10 mit seinem ersten Werkstücktisch 14 und seinem zweiten Werkstücktisch 16 kollisionsfrei bezüglich des zweiten Schwenkträgers 20 von der ersten Schwenkstellung in die zweite Schwenkstellung und umgekehrt, überführbar ist.

Hiernach wird in einem Schritt 104 der erste Schwenkträger 10 von der ersten Schwenkstellung in die zweite Schwenkstellung oder von der zweiten Schwenkstellung in die erste Schwenkstellung überführt.

Hieran anschließend wird in einem Schritt 105 der zweite Schwenkträger 20 von der zweiten Freigabestellung zurück in die erste Schwenkstellung, bzw. in die zweite Schwenkstellung überführt.

Hiernach anschließend kann ein Bearbeiten der nun im Arbeitsbereich 28 angeordneten Werktische 14, 16, 24, 26 erfolgen und ein Beladen der im Beladebereich 30 angeordneten Werktische 14, 16, 24, 26 erfolgen.

### Bezugszeichenliste

- 2: Werkzeugmaschine
- 4: Maschinengestell
- 6: erste Arbeitsspindel
- 8: zweite Arbeitsspindel
- 10: erster Schwenkträger
- 12: erste Schwenkträgerachse
- 14: erster Werkstücktisch
- 15: erste Werkstücktischachse
- 16: zweiter Werkstücktisch
- 17: zweite Werkstücktischachse
- 20: zweiter Schwenkträger
- 22: zweite Schwenkträgerachse
- 24: erster Werkstücktisch
- 25: erste Werkstücktischachse
- 26: zweiter Werkstücktisch
- 27: zweite Werkstücktischachse
- 28: Arbeitsbereich
- 30: Beladebereich
- 32: erste Spindelachse
- 34: zweite Spindelachse

## Patentansprüche

1. Werkzeugmaschine (2) mit einem Maschinengestell (4), mit mindestens einer ersten Arbeitsspindel (6), mit mindestens einer zweiten Arbeitsspindel (8), mit mindestens einem der ersten Arbeitsspindel (6) zugeordneten ersten Schwenkträger (10), der im Maschinengestell (4) um eine erste Schwenkträgerachse (12) schwenkbar gelagert ist, und der mindestens einen ersten Werkstücktisch (14) und mindestens einen zweiten Werkstücktisch (16) umfasst, wobei erster Werkstücktisch (14) und zweiter Werkstücktisch (16) bezüglich der ersten Schwenkträgerachse (12) auf einander gegenüberliegenden Seiten des ersten Schwenkträgers (10) am ersten Schwenkträger (10) angeordnet sind und jeweils einen Störbereich definieren, in welchem sie anordenbar oder angeordnet sind, und mit mindestens einem der zweiten Arbeitsspindel (8) zugeordneten zweiten Schwenkträger (20), der im Maschinengestell (4) um eine parallel zur ersten Schwenkträgerachse (12) verlaufende und zur ersten Schwenkträgerachse (12) beabstandete zweite Schwenkträgerachse (22) schwenkbar gelagert ist, und der mindestens einen ersten Werkstücktisch (24) und mindestens einen zweiten Werkstücktisch (26) umfasst, die bezüglich der zweiten Schwenkträgerachse (22) auf einander gegenüberliegenden Seiten des zweiten Schwenkträgers (20) am zweiten Schwenkträger (20) angeordnet sind und jeweils einen Störbereich definieren, in welchem sie anordenbar oder angeordnet sind, wobei der erste Schwenkträger (10) und der zweite Schwenkträger (20) jeweils von einer ersten Schwenkstellung, in der der jeweils erste Werkstücktisch (14, 24) in einem Arbeitsbereich (28) angeordnet und der ersten, bzw. der zweiten Arbeitsspindel (6, 8) zugänglich ist, jeweils in eine zweite Schwenkstellung überführbar ist/sind, in der der jeweils zweite Werkstücktisch (16, 26) im Arbeitsbereich (28) angeordnet und der ersten, bzw. der zweiten Arbeitsspindel (6, 8) zugänglich ist, wobei der Störbereich des ersten Werkstücktischs (14) und/oder der Störbereich des zweiten Werkstücktisch (16) des ersten Schwenkträgers (10) den Schwenkbereich des ersten Schwenkträgers (10) quer zur ersten Schwenkträgerachse (12) nach außen überragt/überragen.

2. Werkzeugmaschine (2) nach Anspruch 1, **dadurch gekennzeichnet, dass** die Störbereiche des ersten Werkstücktischs (14) und/oder des zweiten Werkstücktischs (16) des ersten Schwenkträgers (10) beim Überführen von der ersten Schwenkstellung in die zweite Schwenkstellung und zurück mit dem Schwenkbereich des zweiten Schwenkträgers (20) überlappt/überlappen.

3. Werkzeugmaschine (2) nach Anspruch 1 oder 2, **dadurch gekennzeichnet, dass** der erste Schwenkträger (10) und der zweite Schwenkträger (20) quer zur ersten Schwenkträgerachse (12) betrachtet überlappungsfrei zueinander angeordnet sind oder dass der erste Schwenkträger (10) und der zweite Schwenkträger (20) quer zur ersten Schwenkträgerachse (12) betrachtet einander abschnittsweise überlappen.

4. Werkzeugmaschine (2) nach einem der vorhergehenden Ansprüche, **dadurch gekennzeichnet, dass** der Störbereich des ersten Werkstücktischs ( 24) und/oder der Störbereich des zweiten Werkstücktischs (26) des zweiten Schwenkträgers (20) den Schwenkbereich des zweiten Schwenkträgers (20) quer zur zweiten Schwenkträgerachse (22) nach außen überragt/überragen und beim Überführen von der ersten Schwenkstellung in die zweite Schwenkstellung und zurück mit dem Schwenkbereich des ersten Schwenkträgers (10) überlappt/überlappen.

5. Werkzeugmaschine (2) nach einem der vorhergehenden Ansprüche, **dadurch gekennzeichnet, dass** in der ersten Schwenkstellung des ersten Schwenkträgers (10) und/oder in der ersten Schwenkstellung des zweiten Schwenkträgers (20) der jeweils zweite Werkstücktisch (16, 26) in einem Beladebereich (30) angeordnet ist, und/oder dass in der zweiten Schwenkstellung des ersten Schwenkträgers (10) und/oder in der zweiten Schwenkstellung des zweiten Schwenkträgers (20) der jeweils erste Werkstücktisch (14, 24) im Beladebereich (30) angeordnet ist.

6. Werkzeugmaschine (2) nach einem der vorhergehenden Ansprüche, **dadurch gekennzeichnet, dass** der erste Werkstücktisch (14) des ersten Schwenkträgers (10), um eine parallel zur ersten Schwenkträgerachse (12) verlaufende erste Werkstücktischachse (15) schwenkbar gelagert ist, und dass der zweite Werkstücktisch (16) des ersten Schwenkträgers (10), um eine parallel zur ersten Schwenkträgerachse (12) verlaufende zweite Werkstücktischachse (17) schwenkbar gelagert ist, wobei die Schwenkbereiche des ersten Werkstücktischs (14) und des zweiten Werkstücktischs (16) die jeweiligen Störbereiche des ersten Werkstücktischs (14), bzw. des zweiten Werkstücktischs (16) bilden und/oder dass der erste Werkstücktisch (24) des zweiten Schwenkträgers (20), um eine parallel zur zweiten Schwenkträgerachse (22) verlaufende erste Werkstücktischachse (25) schwenkbar gelagert ist, und dass der zweite Werkstücktisch (26) des zweiten Schwenkträgers (20), um eine parallel zur zweiten Schwenkträgerachse (22) verlaufende zweiten Werkstücktischachse (27) schwenkbar gelagert ist, wobei die Schwenkbereiche des ersten Werkstücktischs (24) und des zweiten Werkstücktischs (26) die jeweiligen Störbereiche des ersten Werkstücktischs (24), bzw. des zweiten Werkstücktischs (26) bilden.

7. Werkzeugmaschine (2) nach einem der vorhergehenden Ansprüche, **dadurch gekennzeichnet, dass** der erste Schwenkträger (10) in einer ersten Freigabestellung anordenbar ist, in der der erste Werkstücktisch (14) und der zweite Werkstücktisch (16) in einer Position und/oder Ausrichtung anordenbar sind, in der der zweite Schwenkträger (20) mit seinem ersten Werkstücktisch (24) und seinem zweiten Werkstücktisch (26) kollisionsfrei von der ersten Schwenkstellung in die zweite Schwenkstellung und umgekehrt überführbar ist und/oder dass der zweite Schwenkträger (20) in einer zweiten Freigabestellung anordenbar ist, in der der erste Werkstücktisch (24) und der zweiten Werkstücktisch (26) in einer Position und/oder Ausrichtung anordenbar sind, in der der erste Schwenkträger (10) mit seinem ersten Werkstücktisch (14) und seinem zweiten Werkstücktisch (16) kollisionsfrei von der ersten Schwenkstellung in die zweite Schwenkstellung und umgekehrt überführbar ist.

8. Werkzeugmaschine (2) nach Anspruch 7, **dadurch gekennzeichnet, dass** das Überführen des ersten Schwenkträgers (10) in die erste Freigabestellung ein Drehen oder Schwenken des ersten Schwenkträgers (10) um die erste Schwenkträgerachse (12) und/oder ein Drehen oder Schwenken des ersten Werkstücktischs (14) um die erste Werkstücktischachse (15) und/oder des zweiten Werkstücktischs (16) um die zweite Werkstücktischachse (17) umfasst und/oder dass das Überführen des zweiten Schwenkträgers (20) in die zweite Freigabestellung ein Drehen oder Schwenken des zweiten Schwenkträgers (20) um die zweite Schwenkträgerachse (22) und/oder ein Drehen oder Schwenken des ersten Werkstücktischs (24) um die erste Werkstücktischachse (25) und/oder des zweiten Werkstücktischs (26) um die zweite Werkstücktischachse (27) umfasst.

9. Werkzeugmaschine (2) nach einem der vorhergehenden Ansprüche, **dadurch gekennzeichnet, dass** der erste Schwenkträger (10) und der zweite Schwenkträger (20) in einem unabhängigen Betriebsmodus bezüglich ihrer Kinematik entkoppelt, separat und unabhängig voneinander in die erste Schwenkstellung, in die zweite Schwenkstellung, in die erste Freigabestellung und/oder die zweite Freigabestellung überführbar sind und/oder dass der erste Schwenkträger (10) und der zweite Schwenkträger (20) in einem abhängigen Betriebsmodus bezüglich ihrer Kinematik gekoppelt, gemeinsam und gleichzeitig in die erste Schwenkstellung, in die zweite Schwenkstellung, in die erste Freigabestellung und/oder die zweite Freigabestellung überführbar sind.

10. Werkzeugmaschine (2) nach einem der vorhergehenden Ansprüche, **dadurch gekennzeichnet, dass** die erste Schwenkträgerachse (12) und die parallel zur ersten Schwenkträgerachse (12) verlaufende zweite Schwenkträgerachse (22) parallel zu einer horizontal verlaufenden X-Achse verlaufen, wobei die erste Schwenkträgerachse (12) und die zweite Schwenkträgerachse (22) bezüglich einer vertikal verlaufenden Y-Achse zueinander beabstandet sind, insbesondere bezüglich der vertikal verlaufenden Y-Achse übereinander angeordnet sind und insbesondere bezüglich der quer dazu verlaufenden vertikalen Y-Achse miteinander fluchten, oder dass die erste Schwenkträgerachse (12) und die parallel zur ersten Schwenkträgerachse (12) verlaufende zweite Schwenkträgerachse (22) parallel zu einer vertikal verlaufenden Y-Achse verlaufen, wobei die erste Schwenkträgerachse (12) und die zweite Schwenkträgerachse (22) bezüglich einer horizontal verlaufenden X-Achse zueinander beabstandet sind, insbesondere bezüglich der horizontal verlaufenden X-Achse nebeneinander angeordnet sind und insbesondere bezüglich der quer dazu verlaufenden horizontalen X-Achse miteinander fluchten.

11. Werkzeugmaschine (2) nach einem der vorhergehenden Ansprüche, **dadurch gekennzeichnet, dass** die erste Schwenkträgerachse (12) und die zweite Schwenkträgerachse (22) sowie die ersten Werkstücktischachsen (15, 25) und die zweiten Werkstücktischachsen (17, 27) parallel zueinander und parallel zur horizontal verlaufenden X-Achse verlaufen oder dass die erste Schwenkträgerachse(10), die zweite Schwenkträgerachse (22) sowie die ersten Werkstücktischachsen (15, 25) und die zweiten Werkstücktischachsen (17, 27) parallel zueinander und parallel zur vertikal verlaufenden Y-Achse verlaufen.

12. Werkzeugmaschine (2) nach einem der vorhergehenden Ansprüche, **dadurch gekennzeichnet, dass** in der ersten Schwenkstellung und in der zweiten Schwenkstellung der erste Werkstücktisch (14, 24) und der zweite Werkstücktisch (16, 26) eines Schwenkträgers (10, 20) jeweils bezüglich der zugehörigen Schwenkträgerachse (12, 22) des jeweiligen Schwenkträgers (10, 20), an dem sie angeordnet sind, punktsymmetrisch zueinander angeordnet sind und bei einem horizontalen Verlauf der jeweiligen Schwenkträgerachse (12, 22), der erste Werkstücktisch (14, 24) und der zweite Werkstücktisch (16, 26) bezüglich einer vertikalen Achse versetzt zueinander angeordnet sind und insbesondere die Schwenkbereiche des ersten Werkstücktischs (14, 24) und des zweiten Werkstücktischs (16, 26) des dazugehören Schwenkträgers (10, 20) mit einer durch die Schwenkträgerachse (12, 22) verlaufenden vertikalen Ebene überlappen, und bei einem vertikalen Verlauf der jeweiligen Schwenkträgerachse (12, 22), der erste Werkstücktisch (14, 24) und der zweite Werkstücktisch (16, 26) bezüglich einer horizontalen Achse versetzt zueinander angeordnet sind und insbesondere die Schwenkbereiche des ersten Werkstücktischs (14, 24) und des zweiten Werkstücktischs (16, 26) des dazugehören Schwenkträgers (10, 20) mit einer durch die Schwenkträgerachse (12, 22) verlaufenden horizontalen Ebene überlappen.

13. Werkzeugmaschine (2) nach einem der vorhergehenden Ansprüche, **dadurch gekennzeichnet, dass** die erste Arbeitsspindel (6) und die zweite Arbeitsspindel (8) vertikal übereinander angeordnet sind, wenn die die erste Schwenkträgerachse (12) und die parallel zur ersten Schwenkträgerachse (12) verlaufende zweite Schwenkträgerachse (22) parallel zur horizontal verlaufenden X-Achse verlaufen, und dass die erste Arbeitsspindel (6) und die zweite Arbeitsspindel (8) horizontal nebeneinander angeordnet sind, wenn die die erste Schwenkträgerachse (12) und die parallel zur ersten Schwenkträgerachse (12) verlaufende zweite Schwenkträgerachse (22) parallel zur vertikal verlaufenden Y-Achse verlaufen.

14. Verfahren zum Betreiben einer Werkzeugmaschine (2) nach einem der Ansprüche 1 bis 13, mit den Schritten:
a. Überführen des ersten Schwenkträgers (10) von der ersten Schwenkstellung oder von der zweiten Schwenkstellung in eine erste Freigabestellung, in der der erste Werkstücktisch (14) und der zweite Werkstücktisch (16) in einer Position und/oder Ausrichtung angeordnet sind, in der der zweite Schwenkträger (20) mit seinem ersten Werkstücktisch (24) und seinem zweiten Werkstücktisch (26) kollisionsfrei bezüglich des ersten Schwenkträgers (10) von der ersten Schwenkstellung in die zweite Schwenkstellung und umgekehrt überführbar ist;
b. Überführen des zweiten Schwenkträgers (20) von der ersten Schwenkstellung in die zweite Schwenkstellung oder von der zweiten Schwenkstellung in die erste Schwenkstellung; und
c. Überführen des ersten Schwenkträgers (10) von der ersten Freigabestellung in die erste Schwenkstellung, bzw. in die zweite Schwenkstellung;
und/oder
d. Überführen des zweiten Schwenkträgers (20) von der ersten Schwenkstellung oder von der zweiten Schwenkstellung in eine zweite Freigabestellung, in der der erste Werkstücktisch (24) und der zweite Werkstücktisch (26) in einer Position und/oder Ausrichtung angeordnet sind, in der der erste Schwenkträger (10) mit seinem ersten Werkstücktisch (14) und seinem zweiten Werkstücktisch (16) kollisionsfrei bezüglich des zweiten Schwenkträgers (20) von der ersten Schwenkstellung in die zweite Schwenkstellung und umgekehrt überführbar ist;
e. Überführen des ersten Schwenkträgers (10) von der ersten Schwenkstellung in die zweite Schwenkstellung oder von der zweiten Schwenkstellung in die erste Schwenkstellung; und
f. Überführen des zweiten Schwenkträgers (20) von der zweiten Freigabestellung in die erste Schwenkstellung, bzw. in die zweite Schwenkstellung.

15. Verfahren nach Anspruch 14, **dadurch gekennzeichnet, dass** das Überführen des ersten Schwenkträgers (10) in die erste Freigabestellung ein Drehen des ersten Schwenkträgers (10) um die erste Schwenkträgerachse (12) und/oder ein Drehen oder Schwenken des ersten Werkstücktischs (14) um die erste Werkstücktischachse (15) und/oder des zweiten Werkstücktischs (16) um die zweite Werkstücktischachse (17) umfasst und/oder dass das Überführen des zweiten Schwenkträgers (20) in die zweite Freigabestellung ein Drehen des zweiten Schwenkträgers (20) um die zweite Schwenkträgerachse (22) und/oder ein Drehen oder Schwenken des ersten Werkstücktischs (24) um die erste Werkstücktischachse (25) und/oder des zweiten Werkstücktischs (26) um die zweite Werkstücktischachse (27) umfasst.

## Claims

1. Machine tool (2) with a machine frame (4), with at least one first work spindle (6), with at least one second work spindle (8), with at least one first pivot carrier (10) assigned to the first working spindle (6), which is mounted in the machine frame (4) so as to be pivotable about a first pivot carrier axis (12), and which has at least one first workpiece table (14) and at least one second workpiece table (16), wherein the first workpiece table (14) and the second workpiece table (16) are arranged on opposite sides of the first pivot carrier (10) on the first pivot carrier (10) with respect to the first pivot carrier axis (12) and each define an interference region in which they can be arranged or are arranged, and with at least one second pivot carrier (20) associated with the second work spindle (8), which is swivel mounted in the machine frame (4) around a second pivot carrier axis (22) extending parallel to the first pivot carrier axis (12) and spaced from the first pivot carrier axis (12), and which comprises at least one first workpiece table (24) and at least one second workpiece table (26), which are arranged on the second pivot carrier (20) on opposite sides of the second pivot carrier (20) with respect to the second pivot carrier axis (22) and each define an interference region in which they can be arranged or are arranged, wherein the first pivot carrier (10) and the second pivot carrier (20) can each be moved from a first pivot position, in which the respective first workpiece table (14, 24) is arranged in a working area (28) and is accessible to the first or rather the second work spindles (6, 8), respectively, into a second pivot position, in which the respective second workpiece table (16, 26) is arranged in the working area (28) and is accessible to the first or rather the second work spindles (6, 8), respectively, wherein the interference area of the first workpiece table (14) and/or the interference area of the second workpiece table (16) of the first pivot carrier (10) protrudes/protrude outwards beyond the pivoting range of the first pivot carrier (10) transversely to the first pivot carrier axis (12).

2. Machine tool (2) according to claim 1, **characterised in that** the interference areas of the first workpiece table (14) and/or the second workpiece table (16) of the first pivot carrier (10) overlaps/overlap with the pivoting range of the second pivot carrier (20) when moving from the first pivoting position to the second pivoting position and back.

3. Machine tool (2) according to claim 1 or 2, **characterised in that** the first pivot carrier (10) and the second pivot carrier (20), viewed transversely to the first pivot carrier axis (12), are arranged without overlapping with respect to one another, or **in that** the first pivot carrier (10) and the second pivot carrier (20), viewed transversely to the first pivot carrier axis (12), overlap one another in sections.

4. Machine tool (2) according to one of the previous claims, **characterised in that** the interference area of the first workpiece table ( 24) and/or the interference area of the second workpiece table (26) of the second pivot carrier (20) projects/overlaps the pivot range of the second pivot carrier (20) outwards transversely to the second pivot carrier axis (22) and overlaps/overlap with the pivot range of the first pivot carrier (10) during the movement from the first pivot position into the second pivot position and back.

5. Machine tool (2) according to one of the previous claims, **characterised in that** in the first pivot position of the first pivot carrier (10) and/or in the first pivot position of the second pivot carrier (20), the respective second workpiece table (16, 26) is arranged in a loading area (30), and/or **in that** in the second pivot position of the first pivot carrier (10) and/or in the second pivot position of the second pivot carrier (20), the respective first workpiece table (14, 24) is arranged in the loading area (30).

6. Machine tool (2) according to one of the previous claims, **characterised in that** the first workpiece table (14) of the first pivot carrier (10) is swivel mounted around a first workpiece table axis (15) that runs parallel to the first pivot carrier axis (12), and that the second workpiece table (16) of the first pivot carrier (10) is swivel mounted around a second workpiece table axis (17) that runs parallel to the first pivot carrier axis (12), wherein the swivel ranges of the first workpiece table (14) and the second workpiece table (16) form the respective interference areas of the first workpiece table (14) or rather the second workpiece table (16) and/or that the first workpiece table (24) of the second pivot carrier (20) is swivel mounted around the first workpiece table axis (25) that runs parallel to the second pivot carrier axis (22), and that the second workpiece table (26) of the second pivot carrier (20) is swivel mounted around the second workpiece table axis (27) that runs parallel to the second pivot carrier axis (22), wherein the pivoting ranges of the first workpiece table (24) and the second workpiece table (26) form the respective interference areas of the first workpiece table (24) or rather the second workpiece table (26).

7. Machine tool (2) according to one of the previous claims, **characterised in that** the first pivot carrier (10) can be arranged in a first release position in which the first workpiece table (14) and the second workpiece table (16) can be arranged in a position and/or alignment in which the second pivot carrier (20) can be moved with its first workpiece table (24) and its second workpiece table (26) collision-free from the first pivot position into the second pivot position and vice versa and/or that the second pivot carrier (20) can be arranged in a second release position, in which the first workpiece table (24) and the second workpiece table (26) can be arranged in a position and/or alignment in which the first pivot carrier (10) with its first workpiece table (14) and its second workpiece table (16) can be moved collision-free from the first pivot position into the second pivot position and vice versa.

8. Machine tool (2) according to claim 7, **characterised in that** the movement of the first pivot carrier (10) into the first release position comprises a rotation or pivoting of the first pivot carrier (10) around the first pivot carrier axis (12) and/or a rotation or pivoting of the first workpiece table (14) around the first workpiece table axis (15) and/or of the second workpiece table (16) around the second workpiece table axis (17) and/or that the movement of the second pivot carrier (20) into the second release position comprises a rotation or pivoting of the second pivot carrier (20) around the second pivot carrier axis (22) and/or a rotation or pivoting of the first workpiece table (24) around the first workpiece table axis (25) and/or of the second workpiece table (26) around the second workpiece table axis (27).

9. Machine tool (2) according to one of the previous claims, **characterised in that** the first pivot carrier (10) and the second pivot carrier (20) can be decoupled in an independent operating mode with respect to their kinematics, separately and independently of one another into the first pivot position, into the second pivot position, into the first release position and/or into the second release position, and/or **in that** the first pivot carrier (10) and the second pivot carrier (20) can be moved into a dependent operating mode with respect to their kinematics, jointly and simultaneously into the first pivot position, into the second pivot position, into the first release position and/or the second release position.

10. Machine tool (2) according to one of the previous claims **characterised in that** the first pivot carrier axis (12) and the second pivot carrier axis (22) running parallel to the first pivot carrier axis (12) run parallel to a horizontal x axis, wherein the first pivot carrier axis (12) and the second pivot carrier axis (22) are spaced apart with respect to a vertical y axis, in particular are arranged one above the other with respect to the vertical y axis and, in particular, are aligned with respect to the vertical y axis extending transversely to it, or in which the first pivot carrier axis (12) and the second pivot carrier axis (22) running parallel to the first pivot carrier axis (12) extend parallel to a vertical y axis, or in which the first pivot carrier axis (12) and the second pivot carrier axis (22) running parallel to the first pivot carrier axis (12) extend parallel to a vertical y axis, wherein the first pivot carrier axis (12) and the second pivot carrier axis (22) are spaced apart from one another with respect to a horizontal x axis, in particular arranged next to one another with respect to the horizontal x axis and in particular aligned with one another with respect to the horizontal x axis extending transversely to it.

11. Machine tool (2) according to one of the previous claims **characterised in that** the first pivot carrier axis (12) and the second pivot carrier axis (22) as well as the first workpiece table axes (15, 25) and the second workpiece table axis (17, 27) run parallel to one another and parallel to the horizonal x axis or that the first pivot carrier axis (10), the second pivot carrier axis (22) and the first workpiece table axes (15, 25) and the second workpiece table axes (17, 27) run parallel to one another and parallel to the vertical y axis.

12. Machine tool (2) according to one of the previous claims, **characterised in that** in the first pivot position and in the second pivot position the first workpiece table (14, 24)) and the second workpiece table (16, 26) of a pivot carrier (10, 20) are each arranged point-symmetrically to one another with respect to the associated pivot carrier axis (12, 22) of the respective pivot carrier (10, 20) on which they are arranged and, if the respective pivot carrier axis (12, 22) runs horizontally, the first workpiece table (14, 24) and the second workpiece table (16, 26) are arranged offset to one another with respect to a vertical axis and, in particular, the pivoting ranges of the first workpiece table (14, 24) and the second workpiece table (16, 26) of the associated pivot carrier (10, 20) overlap with a vertical plane running through the pivot carrier axis (12, 22), and if the respective pivot carrier axis (12, 22) runs vertically, the first workpiece table (14, 24) and the second workpiece table (16, 26) are arranged offset relative to one another with respect to a horizontal axis and, in particular, the pivoting ranges of the first workpiece table (14, 24) and the second workpiece table (16, 26) of the associated pivot carrier (10, 20) overlap with a horizontal plane running through the pivot carrier axis (12, 22).

13. Machine tool (2) according to one of the previous claims, **characterised in that** the first work spindle (6) and the second work spindle (8) are arranged vertically above one another, if the first pivot carrier axis (12) and the second pivot carrier axis (22) that runs parallel to the first pivot carrier axis (12) run parallel to a horizontal x axis, and if the first work spindle (6) and the second work spindle (8) are arranged horizontally next to one another, if the first pivot carrier axis (12) and the second pivot carrier axis (22) that runs parallel to the first pivot carrier axis (12) run parallel to a vertical y axis.

14. Method for operating a machine tool (2), according to one of claims 1 to 13, comprising the steps:
a. Moving the first pivot carrier (10) from the first pivot position or from the second pivot position into a first release position, in which the first workpiece table (14) and the second workpiece table (16) are arranged in a position and/or alignment in which the second pivot carrier (20) can be moved from the first pivot position to the second pivot position and vice versa with its first workpiece table (24) and its second workpiece table (26) free of collision with regard to the first pivot carrier (10);
b. Moving the second pivot carrier (20) from the first pivot position into the second pivot position or from the second pivot position into the first pivot position; and
c. Moving the first pivot carrier (10) from the first release position into the first pivot position or rather into the second pivot position;
and/or
d. Moving the second pivot carrier (20) from the first pivot position or from the second pivot position into a first release position, in which the first workpiece table (24) and the second workpiece table (26) are arranged in a position and/or alignment in which the first pivot carrier (10) can be moved from the first pivot position to the second pivot position and vice versa with its first workpiece table (14) and its second workpiece table (16) free of collision with regard to the second pivot carrier (20);
e. Moving the first pivot carrier (10) from the first pivot position into the second pivot position or from the second pivot position into the first pivot position; and
f. Moving the second pivot carrier (20) from the second release position into the first pivot position or rather into the second pivot position.

15. Method according to claim 14, **characterised in that** the movement of the first pivot carrier (10) into the first release position comprises a rotation or pivoting of the first pivot carrier (10) around the first pivot carrier axis (12) and/or a rotation or pivoting of the first workpiece table (14) around the first workpiece table axis (15) and/or of the second workpiece table (16) around the second workpiece table axis (17) and/or that the movement of the second pivot carrier (20) into the second release position comprises a rotation or pivoting of the second pivot carrier (20) around the second pivot carrier axis (22) and/or a rotation or pivoting of the first workpiece table (24) around the first workpiece table axis (25) and/or of the second workpiece table (26) around the second workpiece table axis (27).

## Revendications

1. Machine-outil (2) comprenant un châssis de machine (4), avec au moins une première broche de travail (6), au moins une deuxième broche de travail (8), au moins un premier support pivotant (10) associé à l'une des premières broches de travail (6), qui est monté dans le châssis de machine (4) de manière à pouvoir pivoter autour d'un premier axe de support pivotant (12), et qui comprend au moins une première table porte-pièce (14) et au moins une deuxième table porte-pièce (16), la première table porte-pièce (14) et la deuxième table porte-pièce (16) sont disposées sur le premier support pivotant (10) sur des côtés opposés du premier support pivotant (10) par rapport au premier axe de support pivotant (12) et définissent chacune une zone de perturbation dans laquelle elles peuvent être disposées ou sont disposées, et avec au moins un deuxième support pivotant (20) associé à au moins une deuxième broche de travail (8), qui est monté de manière pivotante dans le châssis de machine (4) autour d'un deuxième axe de support pivotant (22) s'étendant parallèlement au premier axe de support pivotant (12) et espacé du premier axe de support pivotant (12), et qui comprend au moins une première table porte-pièce (24) et au moins une deuxième table porte-pièce (26), qui sont disposées sur le deuxième support pivotant (20) des côtés opposés du deuxième support pivotant (20) par rapport au deuxième axe de support pivotant (22) et définissent chacune une zone de perturbation dans laquelle elles peuvent être disposées ou sont disposées, le premier support pivotant (10) et le deuxième support pivotant (20) pouvant être transférés chacun d'une première position de pivotement, dans laquelle la première table porte-pièce respective (14, 24) est disposée dans une zone de travail (28) et est accessible à la première ou à la deuxième broche de travail (6, 8), peut/peuvent être transférés respectivement dans une deuxième position de pivotement dans laquelle respectivement la deuxième table porte-pièce (16, 26) est disposée dans la zone de travail (28) et est accessible à la première ou à la deuxième broche de travail (6, 8), la zone de perturbation de la première table porte-pièce (14) et/ou la zone de perturbation de la deuxième table porte-pièce (16) du premier support pivotant (10) dépassant vers l'extérieur de la zone de pivotement du premier support pivotant (10) transversalement par rapport au premier axe du support pivotant (12).

2. Machine-outil (2) selon la revendication 1, **caractérisée en ce que** les zones de perturbation de la première table porte-pièce (14) et/ou de la deuxième table porte-pièce (16) du premier support pivotant (10) chevauche/chevauchent la zone de pivotement du deuxième support pivotant (20) lors du passage de la première position de pivotement à la deuxième position de pivotement et inversement.

3. Machine-outil (2) selon la revendication 1 ou 2, **caractérisée en ce que** le premier support pivotant (10) et le deuxième support pivotant (20) sont disposés sans chevauchement l'un par rapport à l'autre, vu transversalement par rapport au premier axe de support pivotant (12), ou **en ce que** le premier support pivotant (10) et le deuxième support pivotant (20) se chevauchent par sections, vu transversalement par rapport au premier axe de support pivotant (12).

4. Machine-outil (2) selon l'une des revendications précédentes, **caractérisée en ce que** la zone de perturbation de la première table porte-pièce (24) et/ou la zone de perturbation de la deuxième table porte-pièce (26) du deuxième support pivotant (20) dépasse/dépassent vers l'extérieur de la zone de pivotement du deuxième support pivotant (20) transversalement au deuxième axe du support pivotant (22) et chevauche/chevauchent la zone de pivotement du premier support pivotant (10) lors du passage de la première position de pivotement à la deuxième position de pivotement et inversement.

5. Machine-outil (2) selon l'une des revendications précédentes, **caractérisée en ce que**, dans la première position de pivotement du premier support pivotant (10) et/ou dans la première position de pivotement du deuxième support pivotant (20), la deuxième table porte-pièce respective (16, 26) est disposée dans une zone de chargement (30), et/ou **en ce que**, dans la deuxième position de pivotement du premier support pivotant (10) et/ou dans la deuxième position de pivotement du deuxième support pivotant (20), la première table porte-pièce respective (14, 24) est disposée dans la zone de chargement (30).

6. Machine-outil (2) selon l'une des revendications précédentes, **caractérisée en ce que** la première table porte-pièce (14) du premier support pivotant (10) est montée de manière pivotante autour d'un premier axe de table porte-pièce (15) parallèle au premier axe de support pivotant (12), et **en ce que** la deuxième table porte-pièce (16) du premier support pivotant (10) est montée de manière pivotante autour d'un deuxième axe de table porte-pièce (17) parallèle au premier axe de support pivotant (12), les zones de pivotement de la première table porte-pièce (14) et de la deuxième table porte-pièce (16) formant les zones de perturbation respectives de la première table porte-pièce (14) et de la deuxième table porte-pièce (16) et/ou que la première table porte-pièce (24) du deuxième support pivotant (20) est montée de manière pivotante autour d'un premier axe de table porte-pièce (25) s'étendant parallèlement au deuxième axe de support pivotant (22), et que la deuxième table porte-pièce (26) du deuxième support pivotant (20) est montée de manière pivotante autour d'un deuxième axe de table porte-pièce (27) s'étendant parallèlement au deuxième axe de support pivotant (22), les zones de pivotement de la première table porte-pièce (24) et de la deuxième table porte-pièce (26) formant les zones de perturbation respectives de la première table porte-pièce (24) et de la deuxième table porte-pièce (26).

7. Machine-outil (2) selon l'une des revendications précédentes, **caractérisée en ce que** le premier support pivotant (10) peut être disposé dans une première position de libération dans laquelle la première table porte-pièce (14) et la deuxième table porte-pièce (16) peuvent être disposées dans une position et/ou un alignement dans lequel le deuxième support pivotant (20) avec sa première table porte-pièce (24) et sa deuxième table porte-pièce (26) peut être transféré sans collision de la première position de pivotement à la deuxième position de pivotement et inversement, et/ou **en ce que** le deuxième support pivotant (20) peut être disposé dans une deuxième position de libération dans laquelle la première table porte-pièce (24) et la deuxième table porte-pièce (26) peuvent être disposées dans une position et/ou un alignement dans lequel le premier support pivotant (10) avec sa première table porte-pièce (14) et sa deuxième table porte-pièce (16) peut être transféré sans collision de la première position de pivotement à la deuxième position de pivotement et inversement.

8. Machine-outil (2) selon la revendication 7, **caractérisée en ce que** le transfert du premier support pivotant (10) dans la première position de libération comprend une rotation ou un pivotement du premier support pivotant (10) autour du premier axe de support pivotant (12) et/ou une rotation ou un pivotement de la première table porte-pièce (14) autour du premier axe de table porte-pièce (15) et/ou de la deuxième table porte-pièce (16) autour du deuxième axe de table porte-pièce (17) et/ou **en ce que** le transfert du deuxième support pivotant (20) dans la deuxième position de libération comprend une rotation ou un pivotement du deuxième support pivotant (20) autour du deuxième axe de support pivotant (22) et/ou une rotation ou un pivotement de la première table porte-pièce (24) autour du premier axe de table porte-pièce (25) et/ou de la deuxième table porte-pièce (26) autour du deuxième axe de table porte-pièce (27).

9. Machine-outil (2) selon l'une des revendications précédentes, **caractérisée en ce que** le premier support pivotant (10) et le deuxième support pivotant (20) peuvent être transférés, dans un mode de fonctionnement indépendant, découplés en termes de cinématique, séparément et indépendamment l'un de l'autre, dans la première position de pivotement, dans la deuxième position de pivotement, dans la première position de libération et/ou dans la deuxième position de libération, et/ou **en ce que** le premier support pivotant (10) et le deuxième support pivotant (20) peuvent être transférés, dans un mode de fonctionnement dépendant, de manière couplée en termes de cinématique, conjointement et simultanément dans la première position de pivotement, dans la deuxième position de pivotement, dans la première position de libération et/ou dans la deuxième position de libération.

10. Machine-outil (2) selon l'une des revendications précédentes, **caractérisée en ce que** le premier axe de support pivotant (12) et le deuxième axe de support pivotant (22) s'étendant parallèlement au premier axe de support pivotant (12) s'étendent parallèlement à un axe X horizontal, le premier axe de support pivotant (12) et le deuxième axe de support pivotant (22) sont espacés l'un de l'autre par rapport à un axe Y s'étendant verticalement, sont notamment superposés par rapport à l'axe Y s'étendant verticalement et sont notamment alignés l'un par rapport à l'autre par rapport à l'axe Y vertical s'étendant transversalement à celui-ci, ou **en ce que** le premier axe de support pivotant (12) et le deuxième axe de support pivotant (22) s'étendant parallèlement au premier axe de support pivotant (12) s'étendent parallèlement à un axe Y s'étendant verticalement, le premier axe de support pivotant (12) et le deuxième axe de support pivotant (22) sont espacés l'un de l'autre par rapport à un axe X horizontal, sont notamment disposés l'un à côté de l'autre par rapport à l'axe X horizontal et sont notamment alignés l'un par rapport à l'autre par rapport à l'axe X horizontal transversal.

11. Machine-outil (2) selon l'une des revendications précédentes, **caractérisée en ce que** le premier axe de support pivotant (12) et le deuxième axe de support pivotant (22) ainsi que les premiers axes de table porte-pièce (15, 25) et les seconds axes de table porte-pièce (17, 27) sont parallèles entre eux et parallèles à l'axe X s'étendant horizontalement, ou **en ce que** le premier axe de support pivotant (10), le second axe de support pivotant (22) ainsi que les premiers axes de table porte-pièce (15, 25) et les seconds axes de table porte-pièce (17, 27) s'étendent parallèlement les uns aux autres et parallèlement à l'axe Y s'étendant verticalement.

12. Machine-outil (2) selon l'une des revendications précédentes, **caractérisée en ce que**, dans la première position de pivotement et dans la deuxième position de pivotement, la première table porte-pièce (14, 24) et la deuxième table porte-pièce (16, 26) d'un support pivotant (10, 20) sont chacune disposées de manière symétrique par rapport à l'axe pivotant correspondant (12, 22) du support pivotant respectif (10, 20) sur lequel elles sont disposées, et que, lorsque l'axe de support pivotant respectif (12, 22), la première table porte-pièce (14, 24) et la deuxième table porte-pièce (16, 26) sont décalées l'une par rapport à l'autre par rapport à un axe vertical et, en particulier, les zones de pivotement de la première table porte-pièce (14, 24) et de la deuxième table porte-pièce (16, 26) du support pivotant (10, 20) correspondant se chevauchent avec un plan vertical passant par l'axe du support pivotant (12, 22), et dans le cas d'un déplacement vertical de l'axe du support pivotant (12, 22), la première table porte-pièce (14, 24) et la deuxième table porte-pièce (16, 26) sont décalées l'une par rapport à l'autre par rapport à un axe horizontal et, en particulier, les zones de pivotement de la première table porte-pièce (14, 24) et de la deuxième table porte-pièce (16, 26) du support pivotant (10, 20) correspondant se chevauchent avec un plan horizontal s'étendant à travers l'axe du support pivotant (12, 22).

13. Machine-outil (2) selon l'une des revendications précédentes, **caractérisée en ce que** la première broche de travail (6) et la deuxième broche de travail (8) sont disposées verticalement l'une au-dessus de l'autre lorsque le premier axe de support pivotant (12) et le deuxième axe de support pivotant (22) parallèle au premier axe de support pivotant (12) s'étendent parallèlement à l'axe X horizontal, et **en ce que** la première broche de travail (6) et la deuxième broche de travail (8) sont disposées horizontalement l'une à côté de l'autre lorsque le premier axe de support pivotant (12) et le deuxième axe de support pivotant (22) s'étendant parallèlement au premier axe de support pivotant (12) s'étendent parallèlement à l'axe Y s'étendant verticalement.

14. Procédé pour faire fonctionner une machine-outil (2) selon l'une des revendications 1 à 13, comprenant les étapes suivantes :
a. Transfert du premier support pivotant (10) de la première position de pivotement ou de la deuxième position de pivotement vers une première position de libération dans laquelle la première table porte-pièce (14) et la deuxième table porte-pièce (16) sont disposées dans une position et/ou un alignement dans lesquels le deuxième support pivotant (20) avec sa première table porte-pièce (24) et sa deuxième table porte-pièce (26) peut être transféré sans collision par rapport au premier support pivotant (10) de la première position de pivotement à la deuxième position de pivotement et inversement ;
b. Transfert du deuxième support pivotant (20) de la première position de pivotement à la deuxième position de pivotement ou de la deuxième position de pivotement à la première position de pivotement ; et
c. Transfert du premier support pivotant (10) de la première position de libération à la première position de pivotement ou à la deuxième position de pivotement ;
et/ou
d. Transfert du deuxième support pivotant (20) de la première position de pivotement ou de la deuxième position de pivotement vers une deuxième position de libération, dans laquelle la première table porte-pièce (24) et la deuxième table porte-pièce (26) sont disposées dans une position et/ou un alignement dans lequel le premier support pivotant (10) avec sa première table porte-pièce (14) et sa deuxième table porte-pièce (16) sans collision par rapport au deuxième support pivotant (20) de la première position de pivotement à la deuxième position de pivotement et inversement ;
e. Transfert du premier support pivotant (10) de la première position de pivotement à la deuxième position de pivotement ou de la deuxième position de pivotement à la première position de pivotement ; et
f. Transfert du deuxième support pivotant (20) de la deuxième position de libération à la première position de pivotement ou à la deuxième position de pivotement.

15. Procédé selon la revendication 14, **caractérisé en ce que** le transfert du premier support pivotant (10) dans la première position de libération comprend une rotation du premier support pivotant (10) autour du premier axe du support pivotant (12) et/ou une rotation ou un pivotement de la première table porte-pièce (14) autour du premier axe de la table porte-pièce (15) et/ou le pivotement de la deuxième table porte-pièce (16) autour du deuxième axe de table porte-pièce (17) et/ou **en ce que** le transfert du deuxième support pivotant (20) dans la deuxième position de libération comprend une rotation du deuxième support pivotant (20) autour du deuxième axe de support pivotant (22) et/ou une rotation ou un pivotement de la première table porte-pièce (24) autour du premier axe de table porte-pièce (25) et/ou de la deuxième table porte-pièce (26) autour du deuxième axe de table porte-pièce (27).
